# EUROPÄISCHE PATENTSCHRIFT

(11) **EP 2 121 337 B1**
(45) Veröffentlichungstag und Bekanntmachung des Hinweises auf die Patenterteilung: **31.07.2019**
(21) Anmeldenummer: 08715751.7
(22) Anmeldetag: 13.02.2008
(51) Int. Cl.: B41M 3/14, B42D 15/00, C09D 133/14

(54) **SICHERHEITSELEMENT MIT EINEM MIKROOPTISCHEN ECHTHEITSMERKMAL AUS EINEM PRÄGELACK**
SECURITY ELEMENT WITH A MICRO-OPTICAL AUTHENTICITY FEATURE IN AN EMBOSSING LACQUER
ÉLÉMENT DE SÉCURITÉ AYANT UNE MARQUE D'AUTHENTICITÉ MICRO-OPTIQUE EN VERNIS D'ESTAMPAGE

(30) Priorität: 14.02.2007 DE 102007007914
(43) Veröffentlichungstag der Anmeldung: 25.11.2009
(73) Patentinhaber: Giesecke+Devrient Currency Technology GmbH, 81677 München (DE)
(72) Erfinder: HOFFMÜLLER, Winfried, 83646 Bad Tölz (DE); DICHTL, Marius, 81371 München (DE)
(86) Internationale Anmeldenummer: PCT/EP2008/001097
(87) Internationale Veröffentlichungsnummer: WO 2008/098753

(56) Entgegenhaltungen:
- WO-A-2006/087138
- WO-A2-2005/106601
- US-A1- 2006 199 095

## Beschreibung

Die Erfindung betrifft ein Sicherheitselement, die Verwendung des Sicherheitselements und einen Datenträger, wie ein Wertdokument, mit dem Sicherheitselement.

Datenträger, wie Wert- oder Ausweisdokumente, Banknoten, Urkunden, Schecks, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens oder eines selbsttragenden Transferelements, wie eines Etiketts, das nach seiner Herstellung auf das Wertdokument aufgebracht wird, ausgebildet sein. Eine weitere Variante sind beispielsweise Aufreißfäden für Produktverpackungen.

Eine besondere Rolle spielen dabei Sicherheitselemente mit optisch variablen Elementen, die dem Betrachter unter unterschiedlichen Betrachtungswinkeln einen unterschiedlichen Bildeindruck vermitteln, da optisch variable Elemente selbst mit hochwertigen Farbkopiergeräten nicht reproduziert werden können. Die Sicherheitselemente können dazu mit Sicherheitsmerkmalen in Form beugungsoptisch wirksamer Mikro- oder Nanostrukturen ausgestattet werden, wie etwa mit konventionellen Prägehologrammen oder anderen hologrammähnlichen Beugungsstrukturen, wie sie beispielsweise in den Druckschriften EP 0 330 733 A1 oder EP 0 064 067 A1 beschrieben sind.

Es ist auch bekannt, Linsensysteme als Sicherheitsmerkmale einzusetzen. So ist beispielsweise in der Druckschrift EP 0 238 043 A2 bzw. in der DE 36 09 090 A1 ein Sicherheitsfaden aus einem transparenten Material beschrieben, auf dessen Oberfläche ein Raster aus mehreren parallel laufenden Zylinderlinsen eingeprägt ist. Die Dicke des Sicherheitsfadens ist dabei so gewählt, dass sie in etwa der Fokuslänge der Zylinderlinsen entspricht. Auf der gegenüberliegenden Oberfläche ist ein Druckbild registergenau aufgebracht, wobei das Druckbild unter Berücksichtigung der optischen Eigenschaften der Zylinderlinsen gestaltet ist.

Seit einiger Zeit werden auch sogenannte Moire-Vergrößerungsanordnungen als Echtheitsmerkmale eingesetzt. Eine derartige Moire-Vergrößerungsanordnung ist in der Druckschrift WO 2006/087138 A1 bzw. in der DE 10 2005 028162 A1 offenbart. Das in der WO 2006/087138 A1 offenbarte Sicherheitselement weist wenigstens ein erstes und ein zweites Echtheitsmerkmal auf. Das erste Echtheitsmerkmal umfasst dabei eine erste Anordnung mit einer Vielzahl von fokussierenden Elementen, die in einem ersten Raster vorliegen, sowie eine zweite Anordnung mit einer Vielzahl von mikroskopischen Strukturen, die in einem zweiten Raster vorliegen. Die erste und die zweite Anordnung sind zueinander derart angeordnet, dass die mikroskopischen Strukturen der zweiten Anordnung bei Betrachtung durch die fokussierenden Elemente der ersten Anordnung in Vergrößerung zu sehen sind.

Ein solcher Vergrößerungseffekt wird auch als Moire-Vergrößerung bezeichnet. Die prinzipielle Funktionsweise von Moire-Vergrößerungsanordnungen ist in dem Artikel "The moire magnifier", M. C. Hutley, R. Hunt, R. F. Stevens and P. Savander, Pure Appl. Opt. 3 (1994), S. 133 bis 142, beschrieben. Kurz gesagt, bezeichnet Moire-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moire-Muster, wobei in diesem Fall jeder der Moire-Streifen in Gestalt eines vergrößerten und gedrehten Bildes der wiederholten Elemente des Bildrasters erscheint.

Die fokussierenden Elemente mikrooptischer Echtheitsmerkmale sind aus Prägelacken geprägt. Die durch die fokussierenden Elemente zu betrachtenden Mikrostrukturen können beliebige Formen haben. Gemäß der WO 2006/087138 A1 sind sie aus einem farblosen Prägelack hergestellt und reflektierend beschichtet oder aus einem eingefärbten Prägelack hergestellt. Damit durch die fokussierenden Elemente, im Folgenden Mikrolinsen genannt, jeweils eine vollständige Mikrostruktur erkennbar ist, müssen Mikrolinsen und Mikrostrukturen etwa dieselbe Größenordnung haben. Außerdem ist die Vergrößerungswirkung der Mikrolinsen um so größer, je näher am Brennpunkt der Linse sich die Mikrostruktur befindet. Da die Brennweite umso kleiner ist, je stärker die Krümmung der Linse ist, muss für eine gute Vergrößerung entweder der Abstand zwischen Linse und Mikrostruktur groß sein (bei geringer Linsenkrümmung) oder eine stark gekrümmte Linse verwendet werden (bei kleinerem Abstand zwischen Linse und Mikrostruktur).

Der Zusammenhang zwischen der Größe der Mikrostruktur, dem Durchmesser und der Brennweite der Linsen bedingt eine starke Krümmung der Linsen und eine relativ hohe Dicke des mikrooptischen Echtheitsmerkmals und damit des Sicherheitselements.
Aufgrund der erforderlichen erheblichen Prägetiefe und Krümmung sind die fokussierenden Elemente bzw. Mikrolinsen schwierig durch Prägung herzustellen. Außerdem wird bei stark gekrümmten Mikrolinsen die Größe der abzubildenden Mikrostrukturen eingeschränkt.

Ein weiteres Problem besteht darin, dass die Einbringung in Wertdokumente, z. B. Banknoten, umso schwieriger wird, je dicker das Sicherheitselement ist. Beim Knicken oder Knittern des Wertdokuments verhalten sich dicke Sicherheitselemente spröde und neigen zum Brechen.

Zudem neigen geprägte Schichten hoher Dicke dazu, Licht unkontrolliert zu streuen, so dass durch dicke Mikrolinsen das zu betrachtende Mikrostrukturmotiv überstrahlt und seine Brillanz verringert werden kann.

Eine weitere Schwierigkeit stellt die Auflösung der Motive der Mikrostrukturanordnung dar. Die Mikrostrukturen müssen in der Größenordnung der Mikrolinsen liegen. Sollen komplexe Mikrostrukturen, wie Buchstaben, Ziffern, Logos oder sogar Bilder, dargestellt werden, muss die Auflösung bei wenigen Mikrometern, bevorzugt deutlich darunterliegen, d. h. im Nanometerbereich. Derartige Auflösungen sind mit klassischen Drucktechniken, wie sie zum Teil bei konventionellen mikrooptischen Echtheitsmerkmalen zur Herstellung der Mikrostrukturmotive verwendet werden, oft nicht zu erreichen. Eine Alternative zum Drucken stellt die Herstellung der Mikrostrukturmotive durch Prägung von Prägelacken dar, wie sie gemäß
WO 2006/087138 A1 durchgeführt wird. Diese Alternative ist jedoch oft nur bei farblosen Prägelacken befriedigend. Farbige Prägelacke können entweder durch Pigmente oder durch lösliche Farbstoffe gefärbt werden. Beide Möglichkeiten haben Nachteile. Lösliche Farbstoffe neigen in Verbindung mit Lösungsmitteln zum Ausbluten und zeigen zum Teil erhebliche Migration. Pigmente enthalten oft Teilchen mit einer Teilchengröße, die zu groß ist, um der Prägestruktur feinster Mikrostrukturen völlig zu folgen. Das Ergebnis sind Mikrostrukturmotive mit in der Vergrößerung deutlich sichtbaren Pigmentfehlern.

Die WO 2005/106601 A2 beschreibt ein mikrooptisches Echtheitsmerkmal mit fokussierenden Mikrolinsen, wobei zur Herstellung z.B. das Photopolymer NOA61 von der Firma Norland Products Inc., New Jersey, verwendet wird (siehe Seite 20 der WO 2005/106601 A2).

Ausgehend von diesem Stand der Technik liegt der Erfindung die Aufgabe zugrunde, ein Sicherheitselement mit mikrooptischen Echtheitsmerkmalen bereitzustellen, das gegenüber Sicherheitselementen des Stands der Technik, wie sie beispielsweise aus EP 0 238 043 A2 und aus WO 2006/087138 A1 bekannt sind, eine verringerte Dicke aufweist und leicht in Wertdokumente, wie Banknoten, eingebracht werden kann.

Eine weitere Aufgabe besteht darin, ein Sicherheitselement mit mikrooptischen Echtheitsmerkmalen bereitzustellen, das farblose, farbige oder farbvariierende Mikrostrukturen aufweist.

Eine Aufgabe der vorliegenden Erfindung ist es ferner, ein Sicherheitselement mit mikrooptischen Echtheitsmerkmalen bereitzustellen, das farblose, farbige oder farbvariierende Mikrostrukturen mit hoher Auflösung, bevorzugt einer Auflösung im Nanometerbereich, aufweist.

Darüber hinaus ist es eine Aufgabe der Erfindung, ein Sicherheitselement mit mikrooptischen Echtheitsmerkmalen bereitzustellen, das eine erhöhte Fälschungssicherheit aufweist.

Weitere Aufgaben der Erfindung bestehen in der Bereitstellung eines Wertdokuments mit einem derartigen Sicherheitselement mit mikrooptischen Echtheitsmerkmalen und in der Verwendung des Sicherheitselements mit mikrooptischen Echtheitsmerkmalen zur Produktsicherung.

Die Aufgaben werden gelöst durch das Sicherheitselement mit mindestens einem mikrooptischen Echtheitsmerkmal gemäß Anspruch 1, die Verwendung des Sicherheitselements mit mindestens einem mikrooptischen Echtheitsmerkmal zur Produktsicherung gemäß Anspruch 15 und den Datenträger gemäß Anspruch 16.

Ausführungsformen der Erfindung sind in den jeweiligen abhängigen Ansprüchen angegeben.

Die vorliegende Erfindung betrifft unter anderem Sicherheitselemente mit mikrooptischen Echtheitsmerkmalen mit einem Aufbau, wie er grundsätzlich aus der WO 2006/087138 A1 bekannt ist. Hinsichtlich der verschiedenen Ausführungsformen des Sicherheitselements, insbesondere hinsichtlich der Rasteranordnung der fokussierenden Elemente (Mikrolinsen) und der mikroskopischen Strukturen (Motivelemente), hinsichtlich der geometrischen Gestalt der Mikrolinsen und der mikroskopischen Strukturen, hinsichtlich des Aufbaus des Sicherheitselementes, d. h. der verwendeten Schichten und Schichtfolgen, und hinsichtlich der erzielten Effekte (z. B. Farb- und Bewegungseffekte) wird ausdrücklich auf die WO 2006/087138 A1 Bezug genommen. Das Sicherheitselement gemäß der in Bezug genommenen Druckschrift weist ein erstes mikrooptisches Echtheitsmerkmal und ein zweites Echtheitsmerkmal, das maschinell und/oder visuell prüfbar ist, auf. Gegenstand der vorliegenden Erfindung sind auch Sicherheitselemente ohne ein derartiges zweites Echtheitsmerkmal, d. h. Sicherheitselemente mit nur einem mikrooptischen Echtheitsmerkmal oder mehreren mikrooptischen Echtheitsmerkmalen, gegebenenfalls in Kombination mit einem weiteren, von dem zweiten Echtheitsmerkmal gemäß der in Bezug genommenen Druckschrift verschiedenen Echtheitsmerkmal.

Die Herstellung des erfindungsgemäßen Sicherheitselements, insbesondere der Mikrolinsen und der mikroskopischen Strukturen, kann ebenfalls mittels der in WO 2006/087138 A1 offenbarten Techniken erfolgen. Alternativ können die Mikrolinsen und die mikroskopischen Strukturen auch nach dem in der deutschen Patentanmeldung mit der Anmeldenummer 10 2006 029 852.7 offenbarten Verfahren hergestellt werden. Außerdem wird das betreffende Verfahren weiter unten noch näher erläutert.

Für eine ausführliche Darstellung der Funktionsweise und vorteilhafter Anordnungen der Mikromotivelemente und der Mikrolinsen wird auch auf die anhängige deutsche Patentanmeldung mit der Anmeldenummer 10 2005 062132.5 verwiesen.

Die fokussierenden Elemente bzw. Mikrolinsen konventioneller mikrooptischer Echtheitsmerkmale, wie der in der WO 2006/087138 A1 offenbarten Echtheitsmerkmale, sind aus konventionellen Prägelacken geprägt. Konventionelle Prägelacke haben einen Brechungsindex von etwa 1,5.

Das erfindungsgemäße Sicherheitselement mit mikrooptischem Echtheitsmerkmal, im Folgenden "mikrooptisches Sicherheitselement" genannt, unterscheidet sich von konventionellen mikrooptischen Sicherheitselementen insofern, als zur Herstellung der fokussierenden Elemente und/oder der mikroskopischen Strukturen ein spezieller Prägelack verwendet wird.

Der Prägelack, insbesondere der zur Herstellung der fokussierenden Elemente verwendete Prägelack, weist einen hohen Brechungsindex auf. Der hohe Brechungsindex wird dadurch erzielt, dass der erfindungsgemäße Prägelack ein Bindemittel enthält, das organische Verbindungen mit hohem Brechungsindex aufweist, die unter dem Einfluss von Strahlung, insbesondere von UV-Strahlung oder von Elektronenstrahlung, einer Polyreaktion unterliegen und zu einem Polymer mit hohem Brechungsindex vernetzen bzw. aushärten. Ein hoher Brechungsindex im Sinne der vorliegenden Erfindung ist ein Brechungsindex von mehr als 1,7. Der Brechungsindex ist jeweils der Brechungsindex bei 589 nm und 20 °C, außer es ist etwas anderes angegeben.

Verbindungen mit hohem Brechungsindex sind bekannt. Seit einiger Zeit werden auch Brillengläser und Kontaktlinsen aus Kunststoff in einer hochbrechenden Variante angeboten. Der erhöhte Brechungsindex ermöglicht es, dünnere Kontaktlinsen und Brillen mit ähnlichen optischen Eigenschaften herzustellen, wie sie die dickeren Kontaktlinsen und Brillen aus einem Kunststoff mit niedrigerem Brechungsindex haben, und führt daher zu angenehmer zu tragenden Kontaktlinsen bzw. leichteren Brillen.

Das US-Patent Nr. 6 709 107 offenbart ophthalmische Linsen, die aus zwei Schichten bestehen, wobei die beiden Schichten aus Polymermaterialien mit unterschiedlichem Brechungsindex hergestellt sind. Das erste Polymermaterial hat einen Brechungsindex von mindestens 1,6 und ist beispielsweise ein Polythiourethan oder ein Episulfid-Polymer. Das zweite Polymermaterial hat einen niedrigeren Brechungsindex und ist beispielsweise ein Poly(allylcarbonat), ein Polyurethan, ein Polythiourethan und/oder ein Polycarbonat.

Polythiourethane werden seit Langem zur Herstellung von optischen Linsen/ Gläsern mit hohem Brechungsindex verwendet (siehe Internetseite "http://www.brunobock.org").

Erfindungsgemäß werden Verbindungen mit hohem Brechungsindex nun zur Herstellung mikrooptischer Echtheitsmerkmale, d. h. von Anordnungen fokussierender Elemente und Anordnungen von Mikrostrukturen, verwendet.

Grundsätzlich kommen dafür alle organischen Verbindungen und Kombinationen von organischen Verbindungen in Betracht, die sich zu einem Lacksystem, das prägbar ist oder in sonstiger Weise in eine gewünschte Form gebracht werden kann (Prägelack), verarbeiten lassen und bei Bestrahlung, insbesondere UV- oder Elektronenbestrahlung, einer Polyreaktion unterliegen und zu einem Polymermaterial, d. h. einem Polymer, einem Copolymer oder einem Gemisch von Polymeren und/oder Copolymeren, mit einem hohen Brechungsindex vernetzen bzw. aushärten.

Das Polymer, das Copolymer, und das Gemisch von Polymeren und/oder Copolymeren mit hohem Brechungsindex wird im Folgenden als "hochbrechendes Polymermaterial" bezeichnet. Der Prägelack, der bei Bestrahlung das hochbrechende Polymer bildet, wird im Folgenden als "hochbrechender Prägelack" bezeichnet.

Die organischen Verbindungen, die das hochbrechende Polymer bilden, weisen selbst einen hohen Brechungsindex auf. Derartige Verbindungen enthalten polarisierbare Elemente in ihren Molekülen. Die Polarisierbarkeit eines Elements (d. h. eines Atoms) ist ein Maß für die Deformierbarkeit der Elektronenwolke um das Atom. Sie ist z. B. bei Iod größer als bei Brom oder Chlor. Polarisierbare Elemente im Sinne der vorliegenden Erfindung sind Elemente, die eine größere Polarisierbarkeit als Kohlenstoff haben, insbesondere Halogene, wie Iod, Brom, Chlor, und Schwefel. Die polarisierbaren Elemente verleihen den Verbindungen bzw. ihren Molekülen eine erhöhte Polarisierbarkeit und damit einen erhöhten Brechungsindex.

Die betreffenden strahlenhärtenden Verbindungen enthalten mindestens ein polarisierbares Element in ihren Molekülen, d. h. in einem Monomer. Sie können auch mehrere polarisierbare Elemente pro Monomer enthalten, wobei die polarisierbaren Elemente gleich oder verschieden sein können. Im Allgemeinen gilt, dass der Brechungsindex umso höher wird, je mehr polarisierbare Elemente ein Monomer enthält und je stärker polarisierbare Elemente ein Monomer enthält.

Die strahlenhärtenden Verbindungen, die miteinander eine Polyreaktion eingehen, bilden ein strahlenhärtendes Verbindungssystem.

Ein strahlenhärtendes Verbindungssystem weist entweder Moleküle desselben chemischen Verbindungstyps auf, z. B. olefinisch ungesättigte Verbindungen, die mittels ihrer ungesättigten Bindungen polymerisieren (Selbstvernetzer), oder es weist Moleküle unterschiedlicher chemischer Verbindungstypen auf, d. h. eine erste Verbindung, die mit einer zweiten Verbindung (einem bi- oder polyfunktionellen Vernetzungsmittel) vernetzend umgesetzt werden kann.

Die Moleküle eines strahlenhärtenden Verbindungssystems können außerdem dieselbe chemische Identität oder unterschiedliche chemische Identitäten besitzen. Beispielsweise können sie identische Acrylatmoleküle oder unterschiedlich substituierte Acrylatmoleküle sein. Im ersten Fall entstehen Homopolymere, im zweiten Fall Copolymere. Auch bei Gemischen aus zwei oder mehr strahlenhärtenden Verbindungssystemen entstehen Copolymere. Je höher die Funktionalität der Monomere ist, desto stärker ist die Vernetzung des resultierenden Polymermaterials. In jedem strahlenhärtenden Verbindungssystem können Moleküle unterschiedlicher Funktionalität verwendet werden, wobei jedoch bei selbstvernetzenden Verbindungssystemen die durchschnittliche Funktionalität größer als 1 sein muss, und bei mittels härter vernetzenden Verbindungssystemen die durchschnittliche Funktionalität größer als 2 sein muss.

Der hochbrechende Prägelack kann ein oder mehrere strahlenhärtende(s) Verbindungssystem(e) enthalten.

Der Typ der Polyreaktion, die ein strahlenhärtendes Verbindungssystem eingeht, um das Polymermaterial mit hohem Brechungsindex zu bilden, ist grundsätzlich belanglos. Sowohl Verbindungssysteme, die unter Polymerisation, als auch Verbindungssysteme, die unter Polyaddition, als auch Verbindungssysteme, die unter Polykondensation reagieren, sind brauchbar.

Die Verbindungen eines strahlenhärtenden Verbindungssystems können als Monomere oder als Präpolymere oder als Gemische davon eingesetzt werden.

Die hochbrechenden Verbindungen, d. h. die Verbindungen mit hohem Brechungsindex, können auch gemeinsam mit strahlenhärtenden Verbindungen mit einem niedrigeren Brechungsindex verwendet werden, sofern das bei der Polyreaktion gebildete Polymermaterial ein hochbrechendes Polymermaterial ist.

Das strahlenhärtende Verbindungssystem bzw. die strahlenhärtenden Verbindungssysteme bilden das Bindemittel des hochbrechenden Prägelacks. Der hochbrechende Prägelack enthält entweder nur strahlenhärtende organische Verbindungen oder typischerweise weitere Komponenten. Dabei kann es sich um bei Prägelacken übliche Zusatzstoffe handeln, wie Additive zur Viskositätskontrolle, Additive für Verlauf oder Release, Wachse, Entschäumer, Verdünner, gegebenenfalls Reaktivverdünner. Weitere Zusatzstoffe sind gegebenenfalls Photoinitiatoren oder färbende und/oder den Brechungsindex erhöhende Zusatzstoffe. Photoinitiatoren sind typischerweise bei der UV-Härtung erforderlich, bei der Elektronenstrahlhärtung jedoch nicht.

Die Härtung des Prägelacks kann sowohl kationisch als auch radikalisch initiiert werden, je nach Wahl der Monomere bzw. Präpolymere, bei UV-Härtung auch in Abhängigkeit von dem gewählten Photoinitiator. Der Photoinitiator sollte bevorzugt sowohl im kurzwelligen UV-Spektrum als auch im langwelligen UV-Spektrum aktiv sein. Die Aktivität im kurzwelligen Spektralbereich ist oft wichtig für eine gute Oberflächenhärtung und die Aktivität im langwelligen Spektralbereich ist wichtig für eine gute Durchhärtung. Daher empfiehlt es sich oft, ein Photoinitiatorsystem aus mindestens zwei Photoinitiatoren mit Aktivität in unterschiedlichen Spektralbereichen zu verwenden.

Bevorzugte strahlenhärtende Verbindungssysteme sind beispielsweise Acrylate, die über ihre ungesättigten Verbindungen polymerisieren können, oder Epoxide, die über ihre Epoxidgruppen polymerisieren können, oder Episulfide, die über ihre Episulfidgruppen polymerisieren können. Acrylate, Epoxide und Episulfide, jeweils mit einer Funktionalität von größer als 1, stellen selbstvernetzende strahlenhärtende Verbindungssysteme dar.

Der Brechungsindex des hochbrechenden Polymermaterials kann erfindungsgemäß noch weiter erhöht werden, indem dem hochbrechenden Prägelack anorganische Partikel mit hohem Brechungsindex zugesetzt werden.

Geeignete anorganische Materialien zur Erhöhung des Brechungsindexes sind Metalloxide, Metallsuboxide, Metallfluoride, Metalloxyhalogenide, Metallsulfide, Metallchalcogenide, Metallnitride, Metalloxynitride, Metallcarbide und Gemische davon, insbesondere Siliciumoxid (SiO₂), Zinksulfid (ZnS), Zinkoxid (ZnO), Zirconiumoxid (ZrO₂), Titandioxid (TiO₂), Kohlenstoff, Indiumoxid (In₂O₃), Indiumzinnoxid (ITO), Tantalpentoxid (Ta₂O₅), Chromoxid (Cr₂O₃), Ceroxid (CeO₂), Yttriumoxid (Y₂O₃), Europiumoxid (Eu₂O₃), Eisenoxide, wie Fe₃O₄ und Fe₂O₃, Hafniumnitrid (HfN), Hafniumcarbid (HfC), Hafniumoxid (HfO₂), Lanthanoxid (La₂O₃), Magnesiumoxid (MgO), Neodymoxid (Nd₂O₃), Praseodymoxid (Pr₆O₁₁), Samariumoxid (Sm₂O₃), Antimontrioxid (Sb₂O₃), Siliciummonoxid (SiO), Selentrioxid (Se₂O₃), Zinnoxid (SnO₂), Wolframtrioxid (WO₃), Aluminiumoxid (Al₂O₃), Zinksulfid (ZnS) und Gemische davon. Besonders bevorzugt sind TiO₂, ZrO₂, Fe₂O₃, Fe₃O₄, Cr₂O₃, ZnO, Al₂O₃ und ZnS. Besonders bevorzugt ist es, Gemische verschiedener, den Brechungsindex erhöhender Partikel zu verwenden. Erfindungsgemäß werden diese hochbrechenden organischen Materialien in Form sogenannter "Nanopartikel" verwendet. Nanopartikel sind beispielsweise von Byk (Nanobyk) und von Clariant erhältlich. Je kleiner die Nanopartikel sind, desto feinere Strukturen können mit dem Prägelack gebildet werden, und desto bevorzugter sind die Nanopartikel. Nanopartikel in der Größenordnung von 5 nm sind am meisten bevorzugt, aber auch Nanopartikel in den angebotenen Größenordnungen von 10 nm, 20 nm und sogar 50 nm sind noch sehr gut brauchbar.

Werden derartige Nanopartikel konventionellen Kunststoffen mit einem Brechungsindex von etwa 1,5 zugesetzt, führt dies wegen des hohen Unterschieds in den Brechungsindizes zwischen den Nanopartikeln und dem Kunststoffmaterial zu einer starken Lichtstreuung. Bei den erfindungsgemäßen hochbrechenden Prägelacken ist der Unterschied in den Brechungsindizes zwischen dem Polymermaterial und den Nanopartikeln jedoch gering, was zu einer guten optischen Klarheit der Nanopartikel enthaltenden Polymermaterialien führt.

Nanopartikel können auch zur Färbung des erfindungsgemäßen hochbrechenden Prägelacks verwendet werden. Mit derartigen Nanopigmenten lassen sich sehr vorteilhaft farbige Mikrostrukturen mit sehr feiner Auflösung herstellen. Selbstverständlich können Nanopigmente enthaltende, hochbrechende Prägelacke auch zur Herstellung der fokussierenden Elemente verwendet werden, um farbige fokussierende Elemente zu erhalten, insbesondere wenn die Nanopigmente einen hohen Brechungsindex aufweisen. Geeignete Nanopigmente sind beispielsweise Leitruße, die in einer Primärteilchengröße von 18 nm bis 23 nm zur Verfügung stehen ("Printex" und "Hiblack" von Degussa).

Die Nanopartikel, z. B. Nanopigmente, sollten in dem hochbrechenden Prägelack möglichst homogen verteilt sein. Eine besonders homogene Verteilung kann erzielt werden, wenn die Nanopartikel mit reaktiven Gruppen funktionalisiert werden und über diese reaktiven Gruppen mit den Polymermaterialien Nanoverbundmaterialien bilden. Ein derartiges Nanoverbundmaterial wird beschrieben von Changli Lü, Zhanchen Cui, Zuo Li, Bai Yang und Jiacong Shen, Journal of Materials Chemistry, 2003, 13(3), 526 bis 530. Dabei handelt es sich um ein Nano-ZnS/Polyurethan-Verbundmaterial, das durch Immobilisierung von mit Thiophenol und Mercaptoethanol funktionalisierten ZnS-Nanopartikeln in einer Polyurethanmatrix hergestellt wurde. Filme aus diesem Material weisen einen Brechungsindex von bis zu 1,848 auf (bei 632,8 nm).

Eine weitere besonders bevorzugte Möglichkeit, erfindungsgemäße hochbrechende Prägelacke zu färben, besteht darin, einen geeigneten Farbstoff in den hochbrechenden Prägelack einzupolymerisieren. Dichroitische Farbstoffe, die bei der Vernetzung einpolymerisieren können, ohne ihre Farbe negativ zu verändern, sind von Rolic erhältlich. Derartige Farbstoffe können auch ausgehend von sogenannten Reaktivfarbstoffen für die Faserfärbung synthetisiert werden. Diese Reaktivfarbstoffe enthalten neben der farbgebenden Komponente eine spezielle reaktionsfreudige Komponente, über die sie durch Reaktion mit funktionellen Gruppen der Fasern kovalent an die Fasern gebunden werden. Bei der Färbung der erfindungsgemäßen hochbrechenden Prägelacke reagieren die reaktiven Gruppen der Reaktivfarbstoffe nicht mit funktionellen Gruppen der Fasern, sondern beispielsweise mit OH-Gruppen oder SH-Gruppen der strahlenhärtenden Verbindungen oder Reaktivverdünner der erfindungsgemäßen hochbrechenden Prägelacke. Da die Farbstoffe in dem gebildeten hochbrechenden Polymermaterial einpolymerisiert und damit fixiert sind, zeigen sie nicht die Nachteile der Migration und Lösungsmittelunbeständigkeit der Farbstoffe, wie sie konventionell zum Färben von Prägelacken verwendet werden. Besonders vorteilhaft sind Reaktivfarbstoffe mit hohem Brechungsindex. Die Färbung mit Reaktivfarbstoffen kann alternativ oder zusätzlich zur Färbung mit Nanopigmenten erfolgen.

Die strahlenhärtenden Verbindungen und gegebenenfalls Pigmente, Farbstoffe sowie die Wellenlänge der Strahlungsquelle, bei der UV-Härtung auch das Photoinitiatorsystem, müssen aufeinander abgestimmt sein, um eine gute Härtung zu erreichen. Die Firma BASF hat bei der RadTech 2005 in Barcelona ein Computerprogramm vorgestellt, das für einige Kombinationen Vorhersagen über die Möglichkeit, einen UV-Lack unter bestimmten Bedingungen zu härten, ermöglicht.

Nachfolgend werden einige beispielhafte Rezepturen für hochbrechende UVhärtende Prägelacke angegeben (die nicht unter den Schutzumfang der beiligenden Patentansprüche fallen, aber zur Erleichterung des Verständnisses der Erfindung angegeben werden):

**Radikalisch härtend**

| | Gew.-% |
|---|---|
| Pentabromphenyl-methacrylat (n=1,71) | 45 |
| Phenylthioethyl-acrylat (n=1,56) | 45 |
| S,S'-Thiodi-4,1-phenylen-bis(thiomethacrylat) (Sigma-Aldrich) | 5 |
| Irgacure 907 (Ciba) | 5 |
| | |
| Pentabromphenyl-methacrylat (n=1,71) | 45 |
| Phenylthioethyl-acrylat (n=1,56) | 45 |
| PETIA: Pentaerythritoltriacrylat, Pentaerythritoltetraacrylat (Gemisch, Cytec) | 5 |
| Irgacure 907 (Ciba) | 5 |
| | |
| Pentabromphenyl-methacrylat (n=1,71) | 40 |
| 2,6-Dichlorstyrol (n=1,57) (Sigma-Aldrich) | 30 |
| Phenylthioethyl-acrylat (n=1,56) (BIMAX) | 20 |
| S,S'-Thiodi-4,1-phenylen-bis(thiomethacrylat) (Sigma-Aldrich) | 5 |
| Irgacure 1700 (Ciba) | 5 |
| | |
| Pentabromphenyl-methacrylat (n=1,71) | 40 |
| 2,6-Dichlorstyrol (n=1,57) (Sigma-Aldrich) | 30 |
| Phenylthioethyl-acrylat (n=1,56) (BIMAX) | 20 |
| PETIA: Pentaerythritoltriacrylat, Pentaerythritoltetraacrylat (Gemisch, Cytec) | 5 |
| Irgacure 1700 (Ciba) | 5 |
| | |
| S,S'-Thiodi-4,1-phenylen-bis(thiomethacrylat) (Sigma-Aldrich) | 50 |
| Phenylthioethyl-acrylat (BIMAX) | 45 |
| Irgacure 1700 (Ciba) | 5 |
| | |
| S,S'-Thiodi-4,1-phenylen-bis(thiomethacrylat) (Sigma-Aldrich) | 35 |
| Phenylthioethyl-acrylat (BIMAX) | 40 |
| ZnS-Nanopartikel (ggf. funktionalisiert) | 20 |
| Irgacure 1700 (Ciba) | 5 |

**Kationisch härtend**

| | |
|---|---|
| Bis[4-(2,3-epoxypropylthio)phenyl]sulfid (www.sumitomoseika.co.jp) | 80 |
| DVE-3 (Rahn oder Cytec) | 16 |
| Cyracure UVI-6992 (Photoinitiator von DOW) | 4 |

Die erfindungsgemäßen hochbrechenden Prägelacke sind sowohl zur Herstellung der Anordnung der fokussierenden Elemente als auch zur Herstellung der Anordnung der Mikrostrukturen eines Echtheitsmerkmals vorteilhaft verwendbar. Für die fokussierenden Elemente ist insbesondere der hohe Brechungsindex wesentlich, während für die Mikrostrukturen vor allem die erzielbare feine Auflösung durch die Nanopigmente, bevorzugt einpolymerisierte Nanopigmente, und die einpolymerisierten Farbstoffe wesentlich ist.

Erfindungsgemäße mikrooptische Sicherheitselemente sind mit fokussierenden Elementen aus dem erfindungsgemäßen Prägelack und/oder mit Mikrostrukturen aus dem erfindungsgemäßen Prägelack ausgestattet.

Mit den erfindungsgemäßen Prägelacken lassen sich Sicherheitselemente mit einer Dicke von 20 µm bis 50 µm herstellen, bei einer Trägerfoliendicke im Bereich von 5 µm bis 25 µm. In einer bevorzugten Ausgestaltung liegt die Rasterweite der Anordnung der fokussierenden Elemente und der Anordnung der Mikrostrukturen zwischen etwa 3 µm und etwa 50 µm, vorzugsweise zwischen etwa 5 µm und etwa 35 µm, besonders bevorzugt zwischen etwa 10 µm und etwa 20 µm. Der Durchmesser der fokussierenden Elemente liegt typischerweise in der Größenordnung von etwa 10 µm bis 30 µm und der Durchmesser der einzelnen Mikrostrukturelemente liegt bevorzugt bei derselben Größe.

Zur Herstellung der Mikrolinsen und der Mikrostrukturen kommen unterschiedliche Verfahren zur Anwendung. Insbesondere können mithilfe klassischer Techniken der Halbleitertechnologie (Photolithographie, Elektronenstrahllithographie) geeignete Strukturen in Resistmaterialien belichtet, eventuell veredelt, galvanisch abgeformt und zur Fertigung von Prägewerkzeugen für die Folienprägung verwendet werden. Besonders geeignet zur Herstellung großer Flächen sind die bekannten Verfahren zur Prägung in thermoplastische Folien oder in mit strahlungshärtenden Lacken beschichtete Folien. Alternativ sind auch Techniken bekannt, Mikrolinsen-Anordnungen durch Ink-Jet-Druckverfahren oder durch Selbstorganisationsprozessse von Mikropartikeln auf Oberflächen aufzubringen.

Mittels klassischer Verfahren der Halbleitertechnologie lassen sich insbesondere Mikrostrukturen mit beliebigen Formen und Konturen herstellen.

Ein weiteres Verfahren zur Herstellung von Mikrostrukturen für eine erfindungsgemäße Mikrostrukturanordnung stellt das sogenannte Micro Contact Printing (µCP) dar. Dieses erlaubt eine Auflösung von weniger als 1 µm und ist daher für die Herstellung kleiner, hochaufgelöster, gedruckter mikroskopischer Strukturen geeignet. Bei diesem Verfahren werden die mikroskopischen Strukturen mittels Techniken der Halbleiterstrukturierung hergestellt (Photolithographie, Elektronenstrahllithographie, Ätz- und Lift-Off-Verfahren, Nanoimprint-Lithographie, usw.) und anschließend mit einem Elastomer (z. B. PDMS) abgeformt. Dadurch entsteht ein flexibler, detailliert strukturierter Stempel bzw. Druckzylinder, der bei Verwendung spezieller Druckfarben und Oberflächenbehandlung des Drucksubstrats für den Transfer dünnster Farbschichten geeignet ist. Durch Aufbringen einer geeigneten Farbe mithilfe eines auf diese Weise hergestellten Druckzylinders lassen sich gedruckte mikroskopische Strukturen mit hoher Auflösung erzeugen.

Alternativ können die Mikrostruktur und/oder die Mikrolinsen durch ein Mikrotiefdruckverfahren auf den Träger aufgebracht werden. Bei dem Verfahren wird eine Werkzeugform verwendet, deren Oberfläche eine Anordnung von Erhebungen und Vertiefungen in Gestalt der gewünschten Mikrostruktur oder der gewünschten Mikrolinsen aufweist, die Vertiefungen der Werkzeugform mit einem härtbaren, farbigen oder farblosen Prägelack befüllt, der Träger für eine gute Verankerung des farbigen oder farblosen Lacks vorbehandelt, die Oberfläche der Werkzeugform mit dem Träger in Kontakt gebracht, der in Kontakt mit dem Träger stehende Lack in Vertiefungen der Werkzeugform gehärtet und dabei mit dem Träger verbunden, und die Oberfläche der Werkzeugform wieder von dem Träger entfernt, so dass der mit dem Träger verbundene, gehärtete Prägelack aus den Vertiefungen der Werkzeugform gezogen wird.

Es sei an dieser Stelle angemerkt, dass die aus einem erfindungsgemäßen hochbrechenden Prägelack hergestellten mikrooptischen Anordnungen vorteilhafterweise mit einer Überlackierung ausgestattet werden können. Eine solche auf den mikrooptischen Anordnungen angeordnete Schicht schützt die mikrooptischen Anordnungen vor Fälschungsangriffen, da eine Abformung der mikrooptischen Anordnungen nicht mehr möglich ist. Der Einsatz des erfindungsgemäßen Prägelacks zur Herstellung der mikrooptischen Anordnungen wirkt sich auch auf die Herstellung der Überlackierung vorteilhaft aus, da z. B. die erfindungsgemäßen dünnen Linsen mit geringer Krümmung auch einfacher und zuverlässiger mit einer weiteren Schicht (Überlackierung) ausgestattet werden können, als dies bisher nach dem Stand der Technik möglich war.

Weiterhin kann der Prägelack des erfindungsgemäßen Sicherheitselements insbesondere einen Polymerisationsinitiator enthalten.

Weiterhin kann das strahlenhärtende Verbindungssystem des erfindungsgemäßen Sicherheitselements insbesondere ein durch Elektronenstrahlung härtendes Verbindungssystem sein.

Nachfolgend werden einige beispielhafte erfindungsgemäße Sicherheitselemente anhand von Figuren erläutert. Die Ausführungsformen sind als rein veranschaulichend, keinesfalls beschränkend zu verstehen. Zur besseren Anschaulichkeit wurde in den Figuren auf eine maßstabs- und proportionsgetreue Darstellung verzichtet. Insbesondere kann aus den in den Figuren dargestellten Linsenkrümmungen und Abständen zwischen Linsen und Mikrostrukturen nicht auf die in der Praxis erfindungsgemäß realisierbaren tatsächlichen Linsenkrümmungen und Abstände zwischen Linsen und Mikrostrukturen geschlossen werden.

In den Zeichnungen zeigen:
- Fig. 1: eine schematische Darstellung einer Banknote mit einem eingebetteten Sicherheitsfaden und einem aufgeklebten Transferelement,
- Fig. 2: schematisch den Schichtaufbau eines erfindungsgemäßen Sicherheitsfadens im Querschnitt,
- Fig. 3: ein erfindungsgemäßes Sicherheitselement mit einem einfarbigen Motivbild, wobei (a) eine stark schematisierte perspektivische Ansicht von schräg oben und (b) einem Querschnitt durch das Sicherheitselement zeigt,
- Fig. 4: ein erfindungsgemäßes Sicherheitselement mit einem mehrfarbigen Motivbild, wobei (a) eine schematische Aufsicht und (b) einen Querschnitt durch das Sicherheitselement zeigt,
- Fig. 5: eine Darstellung wie Fig. 4 für ein erfindungsgemäßes Sicherheitselement mit einem Motivbild mit Mischfarben,
- Fig. 6: in (a) und (b) Schritte zur Herstellung mikroskopischer Strukturen für die Mikrostruktur-Anordnung eines erfindungsgemäßen Sicherheitselements,
- Fig. 7: einen Querschnitt durch eine Mikrostruktur-Anordnung eines erfindungsgemäßen Sicherheitselements, und
- Fig. 8: ein erfindungsgemäßes Sicherheitselement mit nach dem Ausführungsbeispiel der Fig. 6 herstellbaren mikroskopischen Strukturen im Querschnitt.

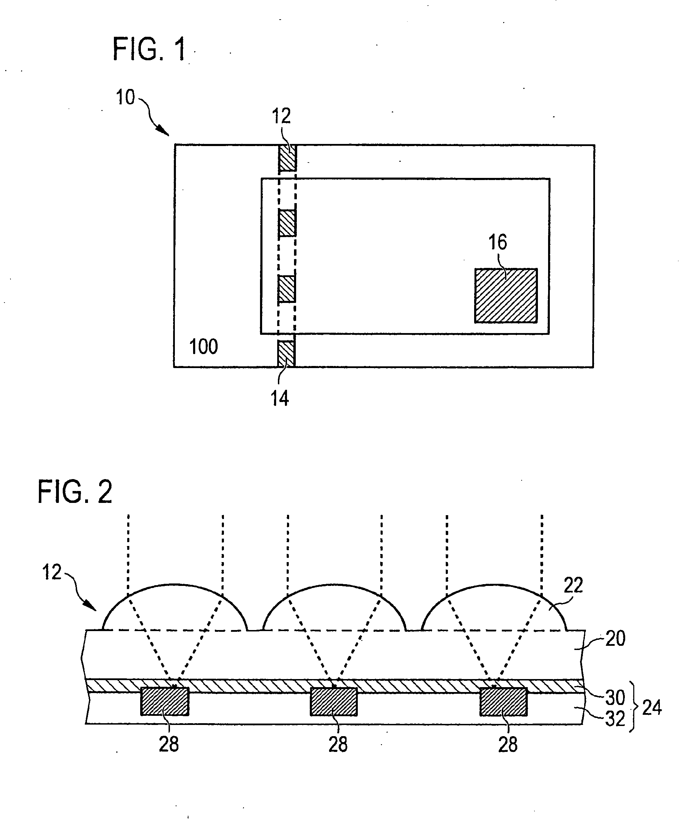

Die Erfindung wird nun am Beispiel einer Banknote näher erläutert. Fig. 1 zeigt dazu eine schematische Darstellung einer Banknote 10 mit zwei Sicherheitselementen 12 und 16. Das erste Sicherheitselement stellt einen Sicherheitsfaden 12 dar, der in bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet.

Fig. 2 zeigt schematisch den Schichtaufbau des Sicherheitsfadens 12 im Querschnitt. Der Sicherheitsfaden 12 enthält einen Träger 20 in Form einer transparenten Kunststofffolie, beispielsweise einer etwa 20 µm dicken PET-Folie. Die Oberseite der Trägerfolie 20 ist mit einer rasterförmigen Anordnung von Mikrolinsen 22 versehen, die auf der Oberfläche der Trägerfolie ein Gitter mit einer vorgewählten Symmetrie bilden.

Auf der Unterseite der Trägerfolie 20 ist eine Anordnung von Mikrostrukturen, eine Motivschicht 24, angeordnet, die eine ebenfalls rasterförmige Anordnung von identischen Mikromotivelementen 28 enthält. Auch die Anordnung der Mikromotivelemente 28 bildet ein zweidimensionales Gitter mit einer vorgewählten Symmetrie.

Wie in Fig. 2 durch den Versatz der Mikromotivelemente 28 gegenüber den Mikrolinsen 22 angedeutet, unterscheidet sich das Gitter der Mikromotivelemente 28 in seiner Symmetrie und/oder in der Größe seiner Gitterparameter geringfügig von dem Gitter der Mikrolinsen 22. Dadurch wird ein Moire-Vergrößerungseffekt erzeugt. Werden die Mikromotivelemente 28 genau in der Rasterweite der Mikrolinsen 22 gedruckt, lassen sich Wechselbildeffekte erzielen. Beispielsweise kann dadurch ein sogenanntes "Flash"-Bild erzeugt werden, bei dem die Mikrostrukturen für einen Beobachter nur aus einer bestimmten Betrachtungsrichtung sichtbar sind, während sie aus allen anderen Richtungen nicht erkennbar sind. Die Gitterperiode und der Durchmesser der Mikromotivelemente 28 liegen in derselben Größenordnung wie die Gitterperiode und der Durchmesser der Mikrolinsen 22 und sind mit bloßem Auge nicht zu erkennen.

Fig. 2 zeigt ein Sicherheitselement, bei dem die Mikromotivelemente 28 durch Mikrotiefdruck aufgebracht wurden. Auf der den Mikrolinsen 22 gegenüberliegenden Seite des Trägers ist daher eine Stützschicht 30 vorgesehen, die aus transparentem, UV-härtendem Lack besteht. Die Stützschicht 30 kann alternativ auch aus einem mit Nanopigmenten oder Reaktivfarbstoffen gefärbten UV-härtenden oder elektronenstrahlenhärtenden Prägelack gemäß der Erfindung hergestellt sein. Dasselbe gilt für die Mikromotivelemente 28. Zumindest die Anordnung der Mikrolinsen 22 jedoch ist aus dem erfindungsgemäßen hochbrechenden Prägelack hergestellt, weshalb die Mikrolinsen 22 eine geringe Krümmung aufweisen können und der Sicherheitsfaden 12 eine geringe Dicke von etwa 20 µm hat. Der Sicherheitsfaden 12 kann daher völlig problemlos in eine Banknote eingebracht werden. Darum ist er beispielsweise mit einer Heißsiegelausstattung 32 versehen.

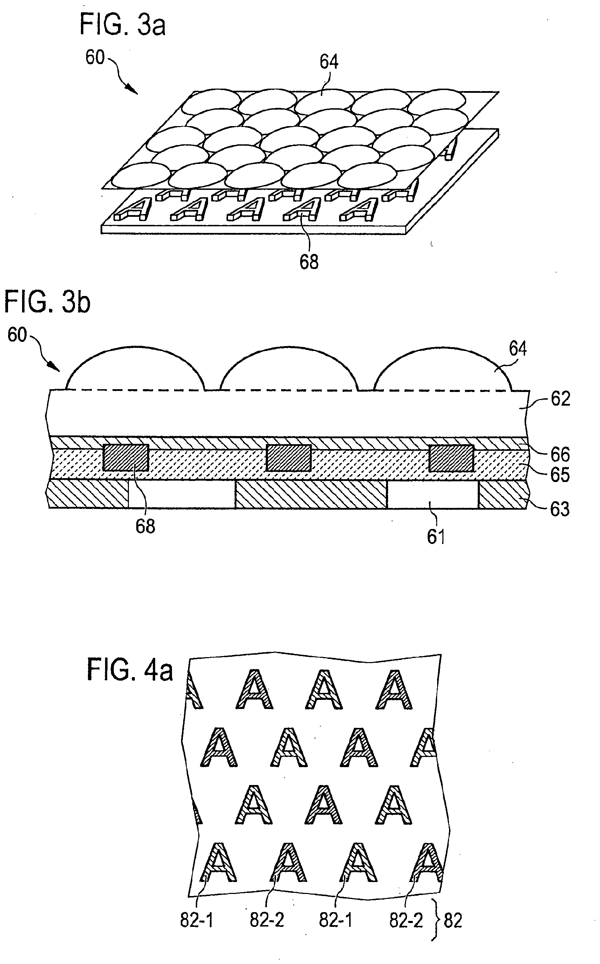

Fig. 3 zeigt ein erfindungsgemäßes Sicherheitselement mit einem einfarbigen Motivbild, wobei das Sicherheitselement als Abdeckfolie 60 für eine Banknote mit Loch ausgebildet ist. Dabei zeigt Fig. 3 (a) eine stark schematisierte perspektivische Ansicht von schräg oben, Fig. 3 (b) einen Querschnitt durch das Sicherheitselement.

Das Sicherheitselement 60 weist einen transparenten Träger 62, eine Anordnung von Mikrolinsen 64, eine Stützschicht 66 und farbige Mikrostrukturelemente (Mikromotivelemente) 68 auf. In Fig. 3 (a) sind die Mikromotivelemente 68 zur Vereinfachung der Darstellung nur als einfache Buchstaben "A" dargestellt. Alternativ können die Mikromotivelemente auch in Form komplizierter Logos oder Bilder vorliegen, die eine sehr hohe Auflösung erfordern. In diesem Fall sind nicht nur die Linsen 64, sondern bevorzugt auch die Mikromotivelemente 68 aus erfindungsgemäßem Prägelack hergestellt, wobei der Prägelack für die Mikromotivelemente 68 erfindungsgemäß mit Nanopigmenten oder Reaktivfarbstoffen gefärbt ist.

In der gezeigten Ausführungsform sind die Mikromotivelemente 68 in eine Überlackierung 65 eingebettet und so vor Fälschungsangriffen geschützt.

Wie bereits erwähnt, ist es grundsätzlich auch denkbar, zusätzlich oder alternativ zu der Überlackierung der zweiten mikrooptischen Anordnung (Mikrostrukturen) auch die erste mikrooptische Anordnung (fokussierende Elemente) mit einer Überlackierung zu versehen. Vorteilhafterweise werden dadurch auch die fokussierenden Elemente, im Fall der in Fig. 3 gezeigten Ausführungsform die Mikrolinsen 64, zuverlässig vor Fälschungsangriffen geschützt. Der Übersichtlichkeit halber sind in der vorliegenden Anmeldung aber keine Figuren enthalten, die die Überlackerung einer ersten mikrooptischen Anordnung zeigen.

Falls gewünscht, können zusätzliche Funktionsschichten aufgebracht werden, beispielsweise eine in Fig. 3 (b) gestrichelt dargestellte metallische oder farbkippende Beschichtung 63, die Negativbildelemente in Form nicht beschichteter Teilbereiche 61 enthält. Derartige Beschichtungen mit Aussparungen können gut mit einem Waschverfahren erzeugt werden, wie es beispielsweise aus der Druckschrift WO 99/13157 A1 oder der unveröffentlichten deutschen Patentanmeldung mit der Anmeldenummer 10 2007 001 791.1 bekannt ist. Was das Verfahren zur Herstellung der Teilbereiche 61 betrifft, wird der Offenbarungsgehalt der WO 99/13157 A1 und der DE 10 2007 001 791.1 zum Offenbarungsgehalt der vorliegenden Anmeldung gemacht.

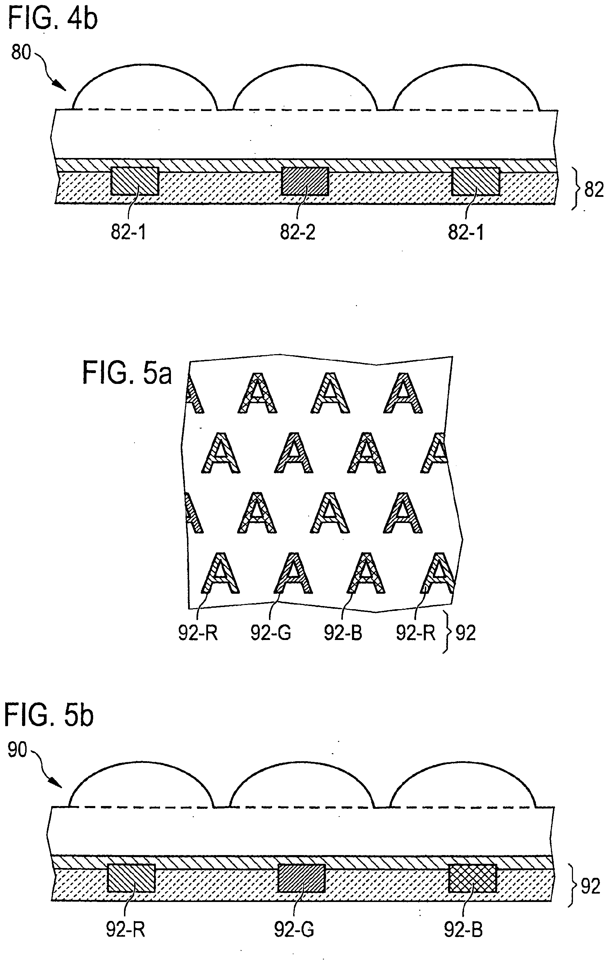

Das in Fig. 4 gezeigte Sicherheitselement 80 nach einem weiteren Ausführungsbeispiel der Erfindung weist ein mehrfarbiges Motivbild auf. Die in Fig. 4 (a) in Aufsicht dargestellte Anordnung der Mikrostrukturelemente 82 enthält verschiedenfarbige Mikrostrukturelemente 82-1 und 82-2, die in der Figur aus Gründen der Einfachheit der Darstellung wieder lediglich durch den Buchstaben "A" dargestellt sind. Die Mikrostrukturelemente können jedoch auch komplexe Darstellungen sein, die eine feine Auflösung erfordern, die durch den erfindungsgemäß gefärbten Prägelack mit Nanopigmenten oder Reaktivfarbstoffen gewährleistet wird. Fig. 4 (b) stellt einen Querschnitt durch das Sicherheitselement dar.

Fig. 5 zeigt eine weitere Gestaltung eines erfindungsgemäßen Sicherheitselements 90, das eine Mikrostruktur mit Mischfarben aufweist. In dem gezeigten Ausführungsbeispiel sind benachbarte Mikrostrukturelemente 92-R, 92-G, 92-B jeweils mit rotem, grünem bzw. blauem erfindungsgemäßem Prägelack mit bestimmten Strukturtiefen und Strichbreiten aufgebracht. Aufgrund der kleinen Abmessungen der Mikrostrukturelemente 92 von beispielsweise etwa 35 µm oder weniger können die einzelnen Farben bei der Betrachtung nicht aufgelöst werden und der Betrachter nimmt eine Mischfarbe wahr. Werden in unterschiedlichen Bereichen des Sicherheitselements unterschiedliche Mischfarben hergestellt, so können Moire-Vergrößerungsanordnungen mit Farbverläufen, Farbkippeffekten oder Farbkontrastvariationen hergestellt werden.

Farbkippeffekte können alternativ auch erzeugt werden, wenn die Mikrostrukturen 92 mit einem aufgedampften Dünnschichtaufbau versehen werden. Anstelle eines Dünnschichtaufbaus können auch bereichsweise farbkippende Effektfarben vorgesehen werden.

Durch eine geeignete Anordnung der Mikrostrukturelemente 92-R, 92-G, 92-B kann auch ein kontinuierlicher Farbverlauf von Rot nach Grün erzielt werden.

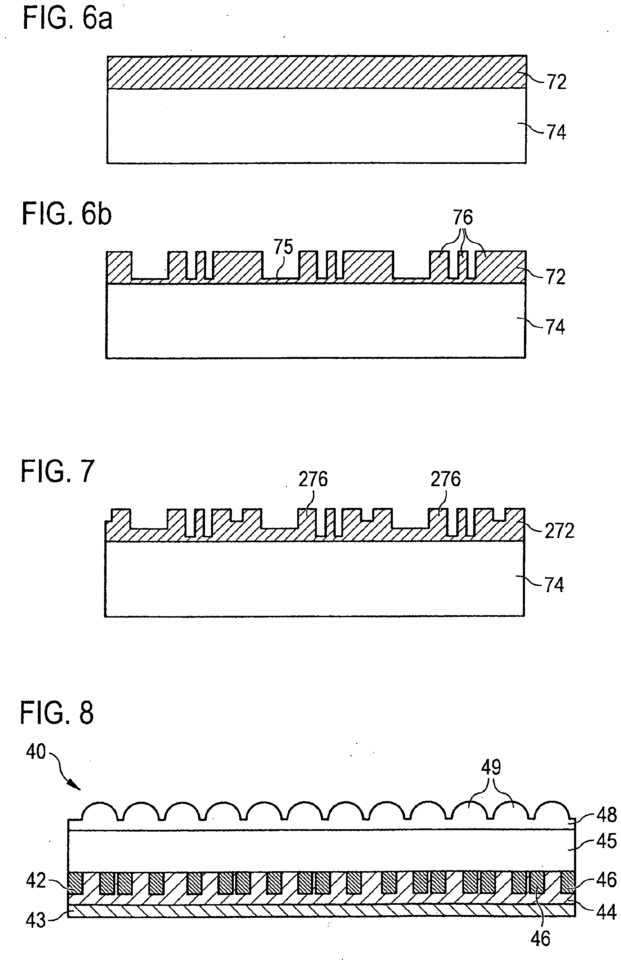

Fig. 6 (a) und 6 (b) zeigt ein erfindungsgemäßes Sicherheitselement in der Herstellungsphase, wobei die Mikrostrukturierung des hochbrechenden Prägelacks nicht wie bei den vorherigen Ausführungsformen durch Mikrotiefdruck erzeugt wird, sondern durch herkömmliche Druck- und Prägetechniken. Daher fehlt eine Stützschicht zwischen dem transparenten Trägersubstrat 74 und der Schicht aus hochbrechendem Prägelack 72. Der hochbrechende Prägelack ist erfindungsgemäß mit Nanopigmenten oder Reaktivfarbstoffen gefärbt. Die Herstellung erfolgt dadurch, dass zuerst der eingefärbte Prägelack 72 durch herkömmliche Drucktechniken auf ein transparentes Trägersubstrat 74 aufgetragen wird. Die Mikrostrukturierung des Prägelacks erfolgt dann mittels bekannter Prägetechniken. Dabei wird die Prägelackschicht 72 zu dünnen, d. h. nahezu farblosen Bereichen 75 und dickeren, Mikrostrukturen bildenden Bereichen 76 strukturiert, wodurch ein farbiges Mikrobild bzw. eine Mikrostrukturanordnung mit hoher Auflösung entsteht (Fig. 6 (b)).

Die in Fig. 6 gezeigte Anordnung aus Trägerfolie 74 und Mikrostrukturen 76 wird dann mit einer Anordnung fokussierender Elemente, die erfindungsgemäß ebenfalls aus dem hochbrechenden Prägelack hergestellt werden, zu einem mikrooptischen Sicherheitselement kombiniert.

Fig. 7 zeigt eine Mikrostrukturanordnung ähnlich derjenigen von Fig. 6, wobei jedoch die Prägelackschicht 272 so ausgebildet ist, dass die Mikrostrukturen 276 der Mikrostruktur-Anordnung mit unterschiedlichen Profilhöhen bzw. -tiefen ausgebildet sind, die entsprechend der jeweiligen Dicke der erfindungsgemäßen Prägelackschicht eine unterschiedliche Farbsättigung und damit einen unterschiedlichen Kontrast erzielen. Auf diese Weise lassen sich Mikrostrukturen auch beispielsweise als Halbtonbilder realisieren.

Eine weitere Möglichkeit zur Herstellung geprägter Mikrostrukturen ist in Fig. 8 näher erläutert. In diesem Ausführungsbeispiel wird die Prägung in einem lasierend eingefärbten Prägelack 42, z. B. lasierend eingefärbtem UV-Lack, vorgenommen, der auf ein transparentes Trägersubstrat 45, z. B. eine PET-Folie, aufgetragen ist. Die geprägten Mikrostrukturen 46 können anschließend z. B. in Form von Zeichen oder Mustern vorliegen. Auf der anderen Seite des Trägersubstrats 45 ist einem erfindungsgemäßen strahlenhärtenden Prägelack, z. B. einem UV-Lack, eine Linsenanordnung 48 eingeprägt, die eine Vielzahl von Mikrolinsen 49 aufweist.

Unter der Prägelackschicht 42 ist eine reflektierende Metallschicht oder eine opake, z. B. weiße Farbschicht 44 aufgebracht. Bei Verwendung unterschiedlich eingefärbter Prägelacke und Abdeckfarben lassen sich auf diese Weise insbesondere subtraktive und additive Farbeffekte erzeugen.

Zum Übertragen des Sicherheitselements 40 auf ein Sicherheitspapier bzw. zur Verbesserung der Haftung eines als Sicherheitsfaden ausgestalteten Sicherheitselements kann ferner ein aktivierbarer Kleber 43 auf die Metall- oder Farbschicht 44 aufgebracht sein.

Erfindungsgemäß werden die Sicherheitselemente mit mikrooptischen Echtheitsmerkmalen zur Echtheitssicherung beliebiger Produkte verwendet. Bei Produktverpackungen beispielsweise können die mikrooptischen Echtheitsmerkmale in einem Aufreißfaden enthalten sein.

Ein weiterer Gegenstand der vorliegenden Erfindung ist ein Wertgegenstand, wie ein Markenartikel, ein Wertdokument, eine Banknote oder dergleichen, der mit einem erfindungsgemäßen Sicherheitselement versehen ist.

## Patentansprüche

1. Sicherheitselement zur Echtheitserkennung von Wertgegenständen mit mindestens einem mikrooptischen Echtheitsmerkmal, wobei das mikrooptische Echtheitsmerkmal eine erste mikrooptische Anordnung mit einer Vielzahl von fokussierenden Elementen, die in einem ersten Raster vorliegen und eine zweite mikrooptische Anordnung mit einer Vielzahl von Mikrostrukturen, die in einem zweiten Raster vorliegen, umfaßt, wobei die erste und die zweite Anordnung derart angeordnet sind, dass die Mikrostrukturen der zweiten Anordnung bei Betrachtung durch die fokussierenden Elemente der ersten Anordnung in Vergrößerung zu sehen sind, **dadurch gekennzeichnet, dass** die erste mikrooptische Anordnung aus einem hochbrechenden Prägelack hergestellt ist, der mindestens ein Bindemittel enthält, das mindestens ein strahlenhärtendes Verbindungssystem aus einer oder mehreren organischen Verbindungen aufweist, wobei mindestens ein Teil der organischen Verbindungen des strahlenhärtenden Verbindungssystems aus Molekülen mit mindestens einem polarisierbaren Element besteht, so dass bei der Strahlenhärtung ein Polymermaterial mit einem Brechungsindex von größer als 1,7 gebildet wird und der Prägelack den Brechungsindex erhöhende Nanopartikel enthält, wobei der Brechungsindex der Brechungsindex bei 589 nm und 20°C ist.

2. Sicherheitselement nach Anspruch 1, **dadurch gekennzeichnet, dass** die Nanopartikel Nanopigmente sind.

3. Sicherheitselement nach Anspruch 1 oder 2, **dadurch gekennzeichnet, dass** die Nanopartikel in den Prägelack einpolymerisiert sind.

4. Sicherheitselement nach einem der Ansprüche 1 bis 3, **dadurch gekennzeichnet, dass** die erste und die zweite mikrooptische Anordnung aus dem hochbrechenden Prägelack hergestellt sind.

5. Sicherheitselement nach einem der Ansprüche 1 bis 4, **dadurch gekennzeichnet, dass** das strahlenhärtende Verbindungssystem ein UVhärtendes Verbindungssystem ist.

6. Sicherheitselement nach einem der Ansprüche 1 bis 5, **dadurch gekennzeichnet, dass** der Prägelack einen Polymerisationsinitiator enthält.

7. Sicherheitselement nach einem der Ansprüche 1 bis 6, **dadurch gekennzeichnet, dass** das strahlenhärtende Verbindungssystem ein durch Elektronenstrahlung härtendes Verbindungssystem ist.

8. Sicherheitselement nach einem der Ansprüche 1 bis 7, **dadurch gekennzeichnet, dass** das erste und das zweite Raster des mikrooptischen Echtheitsmerkmals eine feste geometrische Beziehung aufweisen.

9. Sicherheitselement nach einem der Ansprüche 1 bis 8, **dadurch gekennzeichnet, dass** die Mikrostrukturen der zweiten Anordnung des mikrooptischen Echtheitsmerkmals in Form von Mikrozeichen oder Mikromuster vorliegen.

10. Sicherheitselement nach einem der Ansprüche 1 bis 9, **dadurch gekennzeichnet, dass** die Mikrostrukturen und/oder die fokussierenden Elemente farbig ausgebildet sind.

11. Sicherheitselement nach Anspruch 10, **dadurch gekennzeichnet, dass** die Mikrostrukturen aus Mikrostrukturelementen verschiedener Farbe bestehen.

12. Sicherheitselement nach einem der Ansprüche 1 bis 11, **dadurch gekennzeichnet, dass** es eine Gesamtdicke von 20 bis 50 µm hat.

13. Sicherheitselement nach einem der Ansprüche 1 bis 12, **dadurch gekennzeichnet, dass** es ein Transferelement oder ein Sicherheitsfaden ist.

14. Sicherheitselement nach einem der Ansprüche 1 bis 13, **dadurch gekennzeichnet, dass** die Mikrostrukturen und/oder die fokussierenden Elemente durch Techniken der Halbleitertechnologie oder durch Micro Contact Printing (µCP) oder Mikrotiefdruck aufgebracht werden.

15. Verwendung eines Sicherheitselements nach einem der Ansprüche 1 bis 14 zur Echtheitskennzeichnung eines Produkts.

16. Datenträger, wie ein Wertdokument, **dadurch gekennzeichnet, dass** es mit einem Sicherheitselement nach einem der Ansprüche 1 bis 14 ausgestattet ist.

## Claims

1. A security element for the authenticity recognition of objects of value having at least one micro-optic authentication feature, wherein the micro-optic authentication feature comprises a first micro-optic arrangement having a multiplicity of focusing elements, which are present in a first grid and a second arrangement having a multiplicity of microscopic structures which are present in a second grid, wherein the first and second arrangements are disposed such that the microstructures of the second arrangement are to be seen magnified upon viewing through the focusing elements of the first arrangement, **characterized in that** the first micro-optic arrangement is produced from a highly refractive emboss lacquer. which contains at least one binding agent, which has at least one radiation-curing compound system made of one or more organic compounds, wherein at least a portion of the organic compounds of the radiation-curing compound system consists of molecules having at least one polarizable element, so that a polymeric material with a refractive index of greater than 1.7 is formed upon radiation curing and the emboss lacquer contains refractive index enhancing nanoparticles, wherein the refractive index is the refractive index at 589 nm and 20°C.

2. The security element according to claim 1, **characterized in that** the nanoparticles are nanopigments.

3. The security element according to claim 1 or 2, **characterized in that** the nanoparticles are polymerized into the embossing lacquer.

4. The security element according to any of claims 1 to 3, **characterized in that** the first and the second micro-optic arrangement are produced from the highly refractive emboss lacquer.

5. The security element according to any of claims 1 to 4, **characterized in that** the radiation-curing compound system is a UV-curing compound system.

6. The security element according to any of claims 1 to 5, **characterized in that** the embossing lacquer contains a polymerization initiator.

7. The security element according to any of claims 1 to 6, **characterized in that** the radiation-curing compound system is a compound system curing through electron beams.

8. The security element according to any of claims 1 to 7, **characterized in that** the first and second grids of the micro-optic authenticity feature have a fixed geometrical relation.

9. The security element according to any of claims 1 to 8, **characterized in that** the microstructures of the second arrangement of the micro-optic authenticity feature are present in the form of microcharacters or micropattems.

10. The security element according to any of claims 1 to 9, **characterized in that** the microstructures and/or the focusing elements are configured to be colored.

11. The security element according to claim 10, **characterized in that** the microstructures comprise microstructure elements of different color.

12. The security element according to any of claims 1 to 11, **characterized in that** it has a total thickness of 20 to 50 µm.

13. The security element according to any of claims 1 to 12, **characterized in that** it is a transfer element or a security thread.

14. A security element according to any of claims 1 to 13, **characterized in that** the microstructures and/or the focusing elements are applied by techniques of semiconductor technology, or by micro-contact printing (µCP) or microgravure printing.

15. Use of a security element according to any of claims 1 to 14 for marking the authenticity of a product.

16. A data carrier, such as a value document, **characterized in that** it is equipped with a security element according to any of claims 1 to 14.

## Revendications

1. Élément de sécurité destiné à la reconnaissance de l'authenticité d'objets de valeur, ayant au moins une caractéristique micro-optique d'authenticité, cependant que la caractéristique micro-optique d'authenticité comprend un premier agencement micro-optique ayant une pluralité d'éléments de focalisation qui se trouvent dans une première trame et un deuxième agencement micro-optique ayant une pluralité de microstructures qui se trouvent dans une deuxième trame, cependant que le premier et le deuxième agencement sont agencés de telle façon que les microstructures du deuxième agencement sont, lors d'une observation à travers les éléments de focalisation du premier agencement, visibles en agrandissement, **caractérisé en ce que** le premier agencement micro-optique est fabriqué à partir d'un vernis de gaufrage à indice de réfraction élevé contenant au moins un liant qui comporte au moins un système de composés durcissant par rayonnement formé par un ou plusieurs composés organiques, cependant qu'au moins une partie des composés organiques du système de composés durcissant par rayonnement consiste en des molécules ayant au moins un élément polarisable, de telle sorte que, lors du durcissement par rayonnement, un matériau polymère ayant un indice de réfraction supérieur à 1,7 est constitué, et que le vernis de gaufrage contient des nanoparticules augmentant l'indice de réfraction, cependant que l'indice de réfraction est l'indice de réfraction à 589 nm et 20°C.

2. Élément de sécurité selon la revendication 1, **caractérisé en ce que** les nanoparticules sont des nanopigments.

3. Élément de sécurité selon la revendication 1 ou 2, **caractérisé en ce que** les nanoparticules sont polymérisées dans le vernis de gaufrage.

4. Élément de sécurité selon une des revendications de 1 à 3, **caractérisé en ce que** le premier et le deuxième agencement micro-optique sont fabriqués à partir d'un vernis de gaufrage à indice de réfraction élevé.

5. Élément de sécurité selon au moins une des revendications de 1 à 4, **caractérisé en ce que** le système de composés durcissant par rayonnement est un système de composés durcissant par UV.

6. Élément de sécurité selon une des revendications de 1 à 5, **caractérisé en ce que** le vernis de gaufrage contient un initiateur de polymérisation.

7. Élément de sécurité selon une des revendications de 1 à 6, **caractérisé en ce que** le système de composés durcissant par rayonnement est un système de composés durcissant par rayonnement d'électrons.

8. Élément de sécurité selon une des revendications de 1 à 7, **caractérisé en ce que** la première et la deuxième trame de la caractéristique micro-optique d'authenticité présentent un rapport géométrique fixe.

9. Élément de sécurité selon une des revendications de 1 à 8, **caractérisé en ce que** les microstructures du deuxième agencement de la caractéristique micro-optique d'authenticité se trouvent sous forme de micro-caractères ou de micro-motifs.

10. Élément de sécurité selon une des revendications de 1 à 9, **caractérisé en ce que** les microstructures et/ou les éléments de focalisation sont réalisés sous forme colorée.

11. Élément de sécurité selon la revendication 10, **caractérisé en ce que** les microstructures consistent en des éléments de microstructures de différente couleur.

12. Élément de sécurité selon une des revendications de 1 à 11, **caractérisé en ce qu'**il a une épaisseur totale située entre 20 et 50 µm.

13. Élément de sécurité selon une des revendications de 1 à 12, **caractérisé en ce qu'**il est un élément de transfert ou un fil de sécurité.

14. Élément de sécurité selon une des revendications de 1 à 13, **caractérisé en ce que** les microstructures et/ou les éléments de focalisation sont appliqués par des techniques de la technologie des semi-conducteurs ou par Micro Contact Printing (µCP) ou par micro-impression en creux.

15. Utilisation d'un élément de sécurité selon une des revendications de 1 à 14 pour le marquage de l'authenticité d'un produit.

16. Support de données tel qu'un document de valeur, **caractérisé en ce qu'**il est équipé d'un élément de sécurité selon une des revendications de 1 à 14.
